# EUROPEAN PATENT SPECIFICATION

(11) **EP 2 272 714 B1**
(45) Date of publication and mention of the grant of the patent: **07.09.2016**
(21) Application number: 10168845.5
(22) Date of filing: 08.07.2010
(51) Int. Cl.: B60Q 1/14, B60Q 1/18, F21S 8/10

(54) **Vehicle headlamp apparatus**
Fahrzeugscheinwerfervorrichtung
Appareil de phare de véhicule

(30) Priority: 10.07.2009 JP 2009164167
(43) Date of publication of application: 12.01.2011
(60) Divisional application: 13003255.0
(73) Proprietor: Koito Manufacturing Co., Ltd., Tokyo 108-8711 (JP)
(72) Inventor: Toda, Atsushi, Shizuoka-shi Shizuoka (JP); Saeki, Yukinori, Shizuoka-shi Shizuoka (JP); Yamazaki, Atsushi, Shizuoka-shi Shizuoka (JP); Tatara, Naoki, Shizuoka-shi Shizuoka (JP); Fukazawa, Fusao, Shizuoka-shi Shizuoka (JP); Tatara, Naohisa, Shizuoka-shi Shizuoka (JP); Endo, Osamu, Shizuoka-shi Shizuoka (JP); Mochizuki, Kiyotaka, Shizuoka-shi Shizuoka (JP)
(74) Representative: Grünecker Patent- und Rechtsanwälte PartG mbB

(56) References cited:
- EP-A1- 2 123 512
- WO-A1-2010/029102
- DE-A1-102005 038 581
- DE-A1-102008 060 949

## Description

The present invention relates to a vehicle headlamp apparatus according to the precharacterizing part of claim 1. Such a device is known from DE102005038581A1 where an automatic high-beam control unit with traffic detection is described, which uses satellite based information about the curvature of the road course to optimize the range of the high beam light distribution for roundabout traffics and curved roads.

JP2008-094127A describes a headlight control apparatus including a headlight, a camera which captures an image of a vehicle ahead, and a control unit which controls the headlight to change a light distribution pattern in accordance with a position of the vehicle ahead or a distance to the vehicle ahead.

DE102007045150A1 describes a technique for partially shielding a high beam light distribution pattern using a shade to suppress a glare to a vehicle ahead while ensuring distant visibility.

To form a partially-shielded high beam light distribution pattern, information on a vehicle ahead is obtained. However, when traveling on a curved road or when the vehicle ahead is traveling on a curved road, there is a situation where it is difficult to obtain information on a vehicle traveling ahead in a distant region. In such a case, the detection oft the vehicle ahead may be delayed as compared with a case when traveling on a straight road, and may result in a delay of switching of a light distribution pattern, thereby creating a risk of producing a glare to a driver of the vehicle ahead.

The present invention is defined in claim 1. It has been made in view of the problem described above, and it is an object of the present invention to reduce a glare resulting from a delay of a detection of a vehicle ahead on a curved road, in a vehicle headlamp apparatus that is operable to switch light distribution patterns in accordance with a position of the vehicle ahead.

An aspect of the present invention provides a vehicle headlamp apparatus. The vehicle headlamp apparatus includes right and left lamp units disposed away from each other in a vehicle width direction, each of the lamp units being operable to form at
least a low beam light distribution pattern and a high beam light distribution pattern, a vehicle detecting section configured to detect a condition of a vehicle ahead of a vehicle on which the vehicle headlamp apparatus is mounted, a pattern determining section configured to determine a light distribution pattern based on the condition of the vehicle ahead, a pattern control section configured to control the lamp units to form the light distribution pattern determined by the pattern determining section, a curve judging section configured to judge whether a road on which the vehicle is traveling is curved, and a pattern restricting section configured to restrict, when the curve judging section judges that the road is curved, a selection of the high beam light distribution pattern in at least one of the lamp units, regardless of the light distribution pattern determined by the pattern determining section, characterised by, when a radially inner side of the curve is on a side of a traveling lane of the road, the pattern restricting section instructs the pattern control section to form the low beam light distribution pattern with the right and left lamp units, and when the radially inner side of the curve is on a side of the opposing lane of the road, the pattern restricting section instructs the pattern control section to form the low beam light distribution pattern with the lamp unit that is disposed closer to the radially inner side of the curve. The pattern restricting section may restrict the selection of the high beam light distribution pattern while the vehicle is traveling on the curve. The pattern restricting section may restrict the selection of the high beam light distribution pattern before the vehicle enters the curve.

According to this configuration, when it is judged that the road on which the vehicle is traveling is curved, a selection of the high beam light distribution pattern, which is likely to produce a glare, is restricted, regardless of the condition of a vehicle ahead. Therefore, it is possible to reduce a glare resulting from the delay of the detection of the vehicle ahead.

When the curve judging section judges that the road is curved, the pattern restricting section may instruct the pattern control section to form the low beam light distribution pattern with at least one of the lamp units. The lamp unit with which the low beam light distribution pattern is formed may be one of the lamp units that is closer to a radially inner side of the curve or one of the lamp units that is disposed closer to an opposing lane of the road. When the high beam light distribution pattern is formed with the lamp unit that is closer to the radially inner side of the curve or the lamp unit that is disposed closer to the opposing lane of the road, it is highly likely that a glare is produced particularly to an oncoming vehicle traveling on the opposing lane. However, by changing it to the low beam light distribution pattern, it is possible to reduce such a risk. In this description, a traveling lane of the road is a lane on which the vehicle travels, and the opposing lane of the road is a lane on which the oncoming vehicle travels in an opposite direction.

If a high beam light distribution pattern is formed by the lamp unit that is disposed closer to the radially inner side of the curve when the radially inner side of the curve is on the side of the opposing lane of the road, likelihood of producing a glare particularly to an oncoming vehicle traveling on the opposing lane is high. However, it is possible to reduce this risk by switching selecting the low beam light distribution pattern. The high beam light distribution pattern may include a one-side high light distribution pattern having a light blocked region above the horizontal line and on one side of the vertical center line opposite to the position of the lamp unit with respect to the right-left direction. In this case, when the radially inner side of the curve is on the side of the opposing lane of the road, the pattern restricting section may instruct the pattern control section to form the one-side high light distribution pattern with the lamp unit that is disposed closer to a radially outer side of the curve.

The curve judging section may include a curve continuity judging section configured to judge whether there is a series of curves. When the curve continuity judging section judges that there is a series of curves, the pattern restricting section may instruct the pattern control section to form the low beam light distribution pattern with
the right and left lamp units during a predetermined period. Accordingly, when the there is a series of curves, it is possible to avoid a situation in which the individual high beam light distribution pattern is repetitively turned on and off, and to prevent a glare to the vehicle ahead.

The vehicle headlamp apparatus may further include a curvature estimating section configured to estimate a curvature of the road on which the vehicle is traveling, and the curve judging section may judge that the road is curved if the curvature is equal to or greater than a threshold curvature. The high beam light distribution pattern may include a one-side high light distribution pattern having a light blocked region above the horizontal line and on one side of the vertical center line opposite to the position of the lamp unit with respect to the right-left direction. The vehicle headlamp apparatus may further include a swivel control section configured to determine a swivel angle for each of the lamp units based on the curvature, and a drive instructing section configured to drive the lamp units to swivel in the right-left direction by the swivel angle. When the radially inner side of the curve is on a side of the opposing lane of the road and the swivel angle is equal to or greater than a threshold angle, the pattern restricting section may instruct the pattern control section to form the low beam light distribution pattern with the lamp unit that is disposed closer to the opposing lane. Accordingly, likelihood of producing a glare to the vehicle ahead when the swivel angle of the lamp units, which is swiveled in accordance with the curve, is large.

Other aspects and advantages of the present invention will be apparent from the following description, the drawings and the claims.

Hereinafter, exemplary embodiments of the present invention will be described in detail with reference to the drawings including:
- Fig. 1:: a schematic sectional view of a headlamp that is used in a vehicle headlamp apparatus according to an exemplary embodiment of the invention;
- Fig. 2:: a schematic perspective view of a rotary shade;
- Fig. 3:: a functional block diagram illustrating a configuration of the vehicle headlamp apparatus and other portions of a vehicle on which the vehicle headlamp apparatus is mounted;
- Fig. 4:: a detailed functional block diagram of an irradiation control unit;
- Figs. 5:: a diagram illustrating examples of individual light distribution patterns that are projected from right and left lamp units onto a virtual vertical screen and combined light distribution patterns that are formed by superimposing the individual light distribution patterns;
- Fig. 6:: a flowchart illustrating an irradiation control to be executed by the irradiation control unit according to a first exemplary embodiment;
- Fig. 7:: a flowchart illustrating an irradiation control to be executed by an irradiation control unit according to a second exemplary embodiment;
- Fig. 8:: a flowchart illustrating the irradiation control to be executed by an irradiation control unit according to a third exemplary embodiment;
- Fig. 9:: a functional block diagram of an irradiation control unit according to a fourth exemplary embodiment;
- Fig. 10:: a flowchart illustrating an irradiation control to be executed by the irradiation control unit according to the fourth exemplary embodiment;
- Fig. 11:: a functional block diagram illustrating a configuration of a vehicle headlamp apparatus and other portions of a vehicle on which the vehicle headlamp apparatus is mounted according to an example useful for understanding the invention;
- Fig. 12A:: a diagram illustrating a lane mark detected by a lane mark detecting unit when a road surface is dry;
- Fig. 12B:: a diagram illustrating a lane mark detected by the lane mark detecting unit when a road surface is wet;
- Fig. 13A:: a diagram illustrating a control by which auxiliary lamps are turned on;

- Fig. 13B:: a diagram illustrating a control by which a diffused pattern of a low beam is condensed; and
- Fig. 14A:: a diagram illustrating an image of a flat road to be processed by an uphill road judging unit; and
- Fig. 14B:: a diagram illustrating an image of an uphill road to be processed by the uphill road judging unit.

### First exemplary embodiment

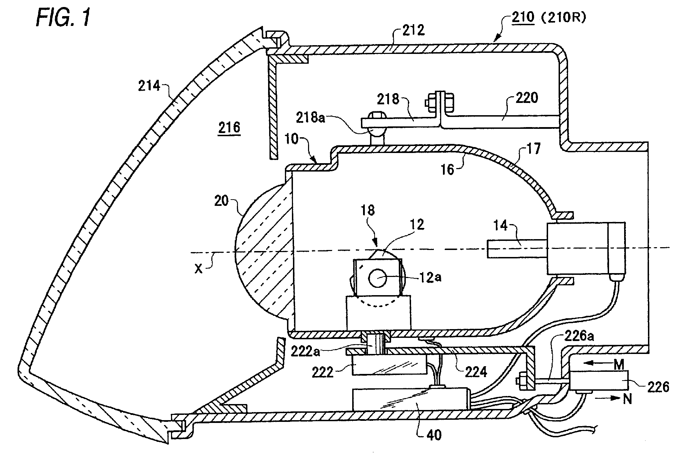

Fig. 1 is a schematic sectional view of a headlamp 210 of a vehicle headlamp apparatus according to an exemplary embodiment of the invention. Fig. 1 shows a cross-section of the headlamp 210 taken along a vertical plane, which includes an optical axis X of a lamp unit 10, when seen from the left side of the headlamp 210. The headlamp 210 employs an adaptive front-lighting system (AFS), and is disposed on right and left sides of a vehicle in the vehicle width direction, and the structure of the headlamp disposed on the right side is substantially the same as that of the headlamp disposed on the left side. Accordingly, the structure of the headlamp 210R disposed on the right side of the vehicle will be described below. The headlamp 210R includes a lamp chamber 216. The lamp chamber is formed by a lamp body 212 having a front opening opened toward the front of the vehicle, and a transparent cover 214 that covers the opening of the lamp body 212. A lamp unit 10, which irradiates light toward the front of the vehicle, is accommodated inside the lamp chamber 216. The lamp unit 10 is attached to a lamp bracket 218 via a pivot mechanism 218a which serves as a rotating center of the lamp unit 10. The lamp bracket 218 is connected to a body bracket 220 extending from an inner wall surface of the lamp body 212, via fasteners such as screws. Accordingly, the lamp unit 10 is arranged at a predetermined position inside the lamp chamber 216 such that the lamp unit 10 is rotatable about the pivot mechanism 218a so as to be, for example, in a forwardly inclined orientation or in a backwardly inclined orientation.

A rotating shaft 222a of a swivel actuator 222 is attached to a bottom portion of the lamp unit 10. The swivel actuator 222 serves as a part of the adaptive front-lighting system by which light irradiation is turned in toward a traveling direction when driving, for example, on a curved road. The swivel actuator 222 swivels the lamp unit 10 about the pivot mechanism 218a toward the traveling direction based on, for example, steering angle data, road configuration data obtained from a navigation system, and a relative position data of a vehicle ahead, which are provided from the vehicle. Accordingly, a region irradiated by the lamp unit 10 can be shifted from a straight ahead region to, for example, a region in a direction in which road is curved so that driver visibility is improved. The swivel actuator 222 may be, for example, a stepping motor. If the swivel angle to be used in the swiveling control is a fixed value, a solenoid or the like may be used as the swivel actuator 222.

The swivel actuator 222 is fixed to a unit bracket 224. A leveling actuator 226, which is disposed outside the lamp body 212, is connected to the unit bracket 224. For example, the leveling actuator 226 is a motor or the like that pushes and pulls a rod 226a in directions M, N. When the rod 226a is pushed in the direction M, the lamp unit 10 is tilted about the pivot mechanism 218a so as to be in the backwardly inclined orientation. When the rod 226a is pulled in the direction N, the lamp unit 10 is tilted about the pivot mechanism 218a so as to be in the forwardly inclined orientation. By tilting the lamp unit 10 to be in the backwardly inclined orientation, the optical axis X can be adjusted upward. By tilting the lamp unit 10 to be in the forwardly inclined orientation, the optical axis X can be adjusted downward. According to this leveling adjustment, the optical axis X can be adjusted in accordance with a change of an orientation of the vehicle. As a result, it is possible to adjust the range of light that is forwardly irradiated from the headlamp 210 to an optimum distance.

The leveling adjustment may be performed in accordance with the orientation of the vehicle while the vehicle is traveling. For example, during acceleration of the vehicle, the orientation of the vehicle becomes backwardly inclined. In contrast, during deceleration of the vehicle, the orientation of the vehicle becomes forwardly inclined. In such cases, the irradiation direction from the headlamp 210 also changes up and down so as to follow the change of the orientation of the vehicle, resulting in a change in forward irradiation range. Accordingly, by performing the leveling adjustment of the lamp unit 10 in real time on the basis of the change of the orientation of the vehicle, it is possible to optimally adjust the range of the forward irradiation even while the vehicle is traveling. This is called as "Auto-Leveling".

A headlamp controller 40 is disposed on the inner wall surface of the lamp chamber 216, for example, below the lamp unit 10. The headlamp controller 40 is configured to control turning on and off of the lamp unit 10 and a light distribution pattern to be formed by the lamp unit 10. For example, the right headlamp 210R includes a headlamp controller 40R. The headlamp controller 40R also controls the swivel actuator 222 and the leveling actuator 226 of the headlamp 210R.

The lamp unit 10 may include an aiming adjustment mechanism. For example, an aiming pivot mechanism, which functions as a turning center during the aiming adjustment, is disposed between the unit bracket 224 and the rod 226a of the leveling actuator 226. Further, a pair of aiming adjustment screws, which are screwed in a front-rear direction of the vehicle, is disposed between the body bracket 220 and the lamp bracket 218 such that the aiming adjustment screws are spaced apart from each other in the vehicle width direction. For example, when the two aiming adjustment screws are forwardly screwed, the lamp unit 10 is turned about the aiming pivot mechanism so as to be in the forwardly inclined orientation. Accordingly, the optical axis X is downwardly adjusted. Likewise, when the two aiming adjustment screws are backwardly screwed, the lamp unit 10 is turned about the aiming pivot mechanism so as to be in the backwardly inclined orientation. Accordingly, the optical axis X is upwardly adjusted. When the aiming adjustment screw, which is disposed on the left in the vehicle width direction, is forwardly screwed, the lamp unit 10 is turned about the aiming pivot mechanism so as to be in a rightward turned orientation. Accordingly, the optical axis X is adjusted toward the right. When the aiming adjustment screw, which is disposed on the right in the vehicle width direction, is screwed forward, the lamp unit 10 is turned about the aiming pivot mechanism so as to be in a leftward turned orientation. Accordingly, the optical axis is adjusted toward the left. This aiming adjustment is performed before a shipment of a vehicle, during a vehicle inspection, or when replacing the lamp unit 10. The aiming adjustment is for adjusting the lamp unti 10 to be in a prescribed orientation as designed, and the light distribution pattern is controlled on the basis of this reference orientation.

The lamp unit 10 includes a shade mechanism 18 having a rotary shade 12, a light source 14, a lamp housing 17 having a reflector 16 on an inner surface thereof, and a projection lens 20. The light source 14 may be an incandescent bulb, a halogen lamp, a discharge bulb, an LED, or the like. In this exemplary embodiment, the light source 14 is a halogen lamp. The reflector 16 reflects light that is emitted from the light source 14. The light emitted from the light source 14 and the light reflected by the reflector 16 are partially directed toward the projection lens 20 above the rotary shade 12 of the shade mechanism 28.

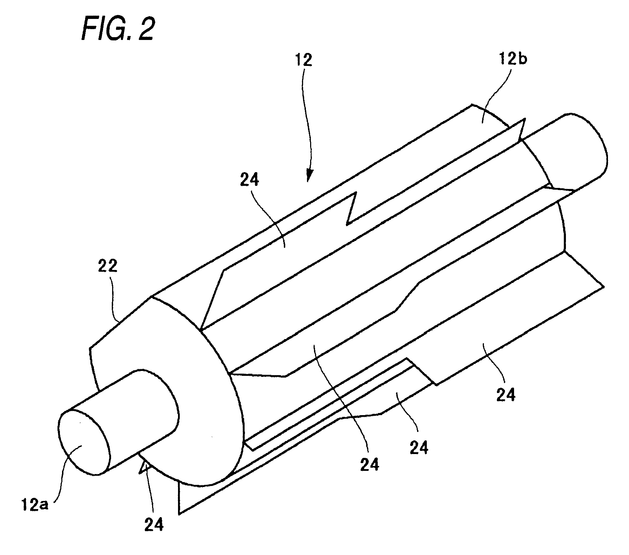

Fig. 2 is a schematic perspective view of the rotary shade 12. The rotary shade 12 is a cylindrical member having a rotating shaft 12a. The rotary shade 12 is rotated about the rotating shaft 12a by a shade motor. The rotary shade 12 has a cutaway portion 22 that is formed by cutting a part of the rotary shade along an axial direction, and holds a plurality of shade plates 24 on an outer peripheral surface 12b other than the cutaway portion 22. Depending on a rotation angle of the rotary shade 12, the cutaway portion 22 or one of the shade plates 24 is moved to a position on the rear focal plane, which includes the rear focus of the projection lens 20. A cutoff line of the light distribution pattern corresponds to of an upper edge of the shade plate 24 that is positioned on the optical axis X in accordance with the rotation angle of the rotary shade 12. For example, when one of the shade plates 24 of the rotary shade 12 is moved toward the optical axis X and blocks a part of the light emitted from the light source 14, a low beam light distribution pattern or a light distribution pattern that partially has the characteristics of the low beam light distribution pattern is formed. When the cutaway portion 22 is moved toward the optical axis X, and the part of the light emitted from the light source 14 is not blocked, so that a high beam light distribution pattern is formed.

The rotary shade 12 may be rotated by driving the motor. In such a case, the rotation angle of the motor is controlled to rotate the rotary shade 12 such that the cutaway portion 22 or one of the shade plates 24 that forms a desired light distribution pattern is moved toward the optical axis X. The cutaway portion 22 formed on the outer peripheral surface 12b of the rotary shade 12 may be omitted so that the rotary shade 12. In such a case, to form the high beam light distribution pattern, the rotary shade 12 may be retracted away from the optical axis X by driving, for example, a solenoid or the like. According to this configuration, when there is a failure in the motor for rotating the rotary shade 12, the light distribution pattern to be formed is fixed to the low beam light distribution pattern or a light distribution pattern similar to the low beam light distribution pattern,. That is, it provides a fail-safe function to reliably avoid a situation in which the rotary shade 12 is fixed at the position where the high beam light distribution pattern is formed.

The projection lens 20 is disposed on the optical axis X extending in the front-rear direction of the vehicle, and the light source 14 is disposed behind the rear focal plane of the projection lens 20. The projection lens 20 is a plano-convex aspheric lens having a convex front surface and a flat rear surface. The projection lens 20 projects a light source image, which is formed on the rear focal plane, onto a virtual vertical screen ahead the headlamp 210, as an inverted image.

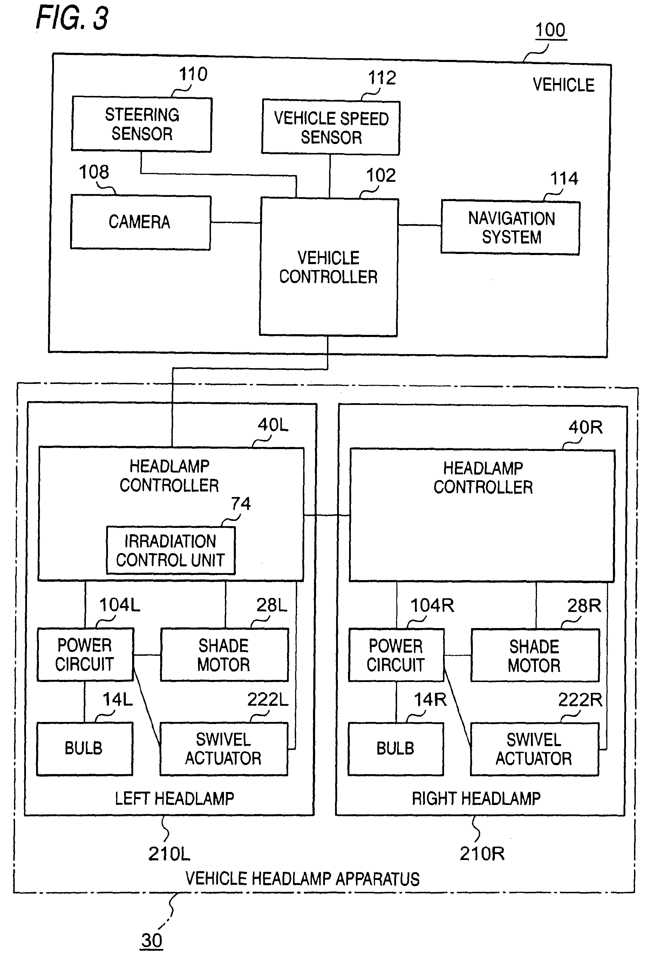

Fig. 3 is a functional block diagram illustrating the configuration of the vehicle headlamp apparatus 30 having the headlamp 210 and other configurations of a vehicle 100 on which the vehicle headlamp apparatus 30 is mounted. The vehicle headlamp apparatus 30 includes a right headlamp 210R and a left headlamp 210L. In the following description, when components of the right and left headlamps 210R, 210L having the same functions need to be particularly distinguished from each other, reference character "R" is added to the end of the reference numeral for the component of the right headlamp 210R, and reference character "L" is added to the end of the reference numeral for the component of the left headlamp 210L.

The right headlamp 210R is controlled by a headlamp controller 40R, and the left headlamp 210L is controlled by a headlamp controller 40L. The vehicle headlamp apparatus 30 forms a combined light distribution pattern by superimposing an individual light distribution pattern formed by the lamp unit 10 of the right headlamp 210R (hereinafter, "right lamp unit 10R") and an individual light distribution pattern formed by the lamp unit 10 of the left headlamp 210L (hereinafter, "left lamp unit 10L"). Accordingly, as an integrated controller of the right and left lamp units 10R, 10L, for example, the headlamp controller 40L includes an irradiation control unit 74. The irradiation control unit 74 manages the control state of the headlamp controllers 40R, 40L so that the individual light distribution patterns are formed by the right and left lamp units 10R, 10L. The irradiation control unit 74 may be included in the headlamp controller 40R. Alternatively, the irradiation control unit 74 may be arranged in a vehicle controller 102.

The headlamp controller 40R, the control state of which is determined by the irradiation control unit 74, controls a shade motor 28R of the right lamp unit 210R to select the individual light distribution pattern to be formed. The headlamp controller 40R further controls a power circuit 104R of the right lamp unit 210R to turn the light source 14R on or off, or controls the swivel actuator 222R to perform a swivel control. Likewise, the headlamp controller 40L, the control state of which is determined by the irradiation control unit 74, controls a shade motor 28L of the left lamp unit 210L to select the individual light distribution pattern to be formed. The headlamp controller 40L further controls a power circuit 104L of the left lamp unit 210L to turn the light source 14L on or off, or controls the swivel actuator 222L to perform a swivel control.

A camera 108, such as a stereo camera, as means for recognizing an object is connected to the vehicle controller 102 of the vehicle 100 in order to detect objects, such as preceding vehicles, oncoming vehicles, and pedestrians. Means for detecting an object ahead of the vehicle and for which irradiation from the vehicle headlamp apparatus 30 needs to be suppressed, may be changed. Other detection means, such as a millimeter-wave radar system or an infrared radar system may be used instead of the camera 108. Further, the means described above may be combined. The camera 108 may be exclusively used for the control of the vehicle headlamp apparatus 30, or may be commonly used with other systems in the vehicle.

The vehicle controller 102 may also obtain information from a steering sensor 110, a vehicle speed sensor 112, and the like that are generally mounted on the vehicle 100. In addition, the vehicle controller 102 may obtain information about road configuration, information about the installation of road signs, and the like from a navigation system 114. By obtaining these kinds of information in advance, the irradiation control unit 74 can smoothly form a light distribution pattern suitable for the road on which the vehicle 100 is traveling.

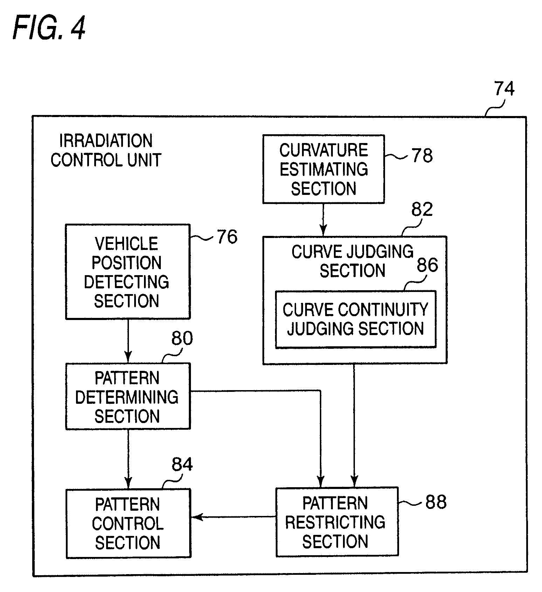

Fig. 4 is a detailed functional block diagram of the irradiation control unit 74. Each block shown in Fig. 4 is achieved by hardware components, such as a CPU or a memory of a computer, and software components such as computer programs stored in a memory, is illustrated as a functional block that is achieved by the interaction between the hardware and the software. Accordingly, it is understood by those skilled in the art that these functional blocks are achieved in various forms depending on the combination of hardware and software.

A vehicle position detecting section 76 receives image data, which is taken by the camera 108, from the vehicle controller 102, and detects the position of a vehicle ahead by searching for feature points, which represent a vehicle, from the image data. Since a technique for detecting the vehicle ahead is well known, the detailed description thereof will be omitted. The information about the detected position of the vehicle ahead is sent to a pattern determining section 80.

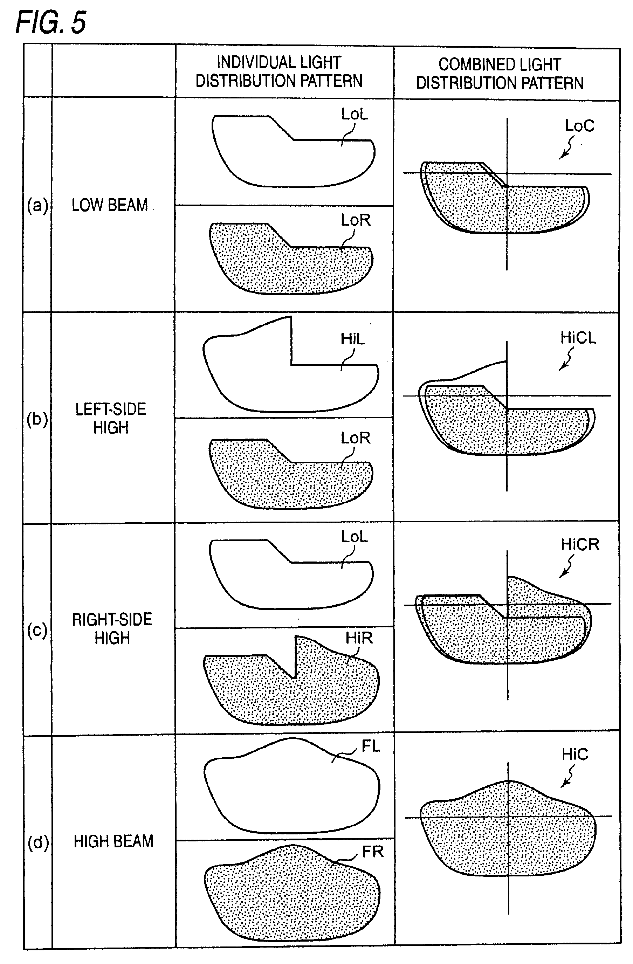

The pattern determining section 80 determines an optimum light distribution pattern in consideration of the vehicle ahead that is detected by the vehicle position detecting section 76. For example, if a preceding vehicle or an oncoming vehicle ahead of the vehicle 100 is detected, the pattern determining section 80 selects a combined low beam light distribution pattern in order to prevent a glare. Further, if preceding vehicles or oncoming vehicles are not detected, the pattern determining section 80 selects a combined high beam light distribution pattern, an irradiation range of which is broadened in order to improve driver visibility. Furthermore, if preceding vehicles do not exist but oncoming vehicles or pedestrians exist in the left-hand traffic system, the pattern determining section 80 selects a left-side high combined light distribution pattern, which is a special high beam light distribution pattern for irradiating a high beam only on the traveling lane side. If only preceding vehicles exist but oncoming vehicles or pedestrians do not exist, the pattern determining section 80 selects a right-side high combined light distribution pattern, which is another special high beam light distribution pattern for irradiating a high beam only on the opposing lane side. The combined light distribution patterns selected by the pattern determining section 80 will be described in detail with reference to Fig. 5.

The pattern determining section 80 sends information about the individual light distribution patterns, which are to be formed by the right and left lamp units 10R, 10L, to a pattern control section 84 in order to form the selected combined light distribution pattern.

The pattern control section 84 drives the shade motors 28R, 28L so that shade plates 24 corresponding to the individual light distribution patterns received from the pattern determining section 80 are moved toward the optical axes X of the right and left lamp units 10R, 10L, respectively. Accordingly, the light distribution pattern selected by the pattern determining section 80 is formed by the right and left lamp units 10R, 10L.

A curvature estimating section 78 receives a steering angle detected by the steering sensor 110 and vehicle speed detected by the vehicle speed sensor 112, and estimates the curvature of the road on which the vehicle 100 is traveling. As another method, the curvature estimating section 78 may receive the information about the geometry of a road, on which the vehicle 100 is traveling, from the navigation system 114 and calculate the curvature of the road on which the vehicle 100 is traveling.

A curve judging section 82 judges whether the curvature of the road on which the vehicle 100 is traveling is equal to or larger than a predetermined threshold R_{A}. The threshold R_{A} is a value at which an image of a distant point on a curve, e.g., the farthest point on the curve, becomes difficult to be captured by a camera or the like, and is set on the basis of an experiment. The curve judging section 82 may include a curve continuity judging section 86 configured to estimate whether there is a series of curves.

If it is judged that the road is curved, the pattern restricting section 88 restricts the selection of a high beam light distribution pattern in at least one of the right and left lamp units 10R, 10L while the vehicle 100 is traveling on the curved road, regardless of the light distribution pattern determined by the pattern determining section 80.

Fig. 5 is a diagram illustrating examples of individual light distribution patterns that are projected from right and left lamp units 10R, 10L onto a virtual vertical screen and examples of combined light distribution patterns formed by superimposing the individual light distribution patterns.

In this exemplary embodiment, the shade plates 24, which are used to form individual light distribution patterns LoR, HiR by the right lamp unit 10R, are held on the rotary shade 12R, and the shade plates 24, which are used to form individual light distribution patterns LoL, HiL by the left lamp unit 10L are held on the rotary shade 12L. Each of the light distribution patterns HiR, HiL has a substantially vertical cutoff line above the horizontal line, and includes a light blocked region on the right or left side of the vertical line when the optical axis X is oriented in the straight ahead direction. Each of the low light distribution patterns LoR, LoL has a cutoff line including a right portion that horizontally extends below the horizontal line on the right side in the vehicle width direction, a left portion that horizontally extends slightly above the right portion on the left side in the vehicle width direction, and a middle portion that is inclined upward to the left side and connects the right portion with the left portion. By combining these individual light distribution patterns, the vehicle headlamp apparatus 30 is operable to form four kinds of combined light distribution patterns shown in Fig. 5.

In Fig. 5, (a) illustrates a combined low beam light distribution pattern LoC that is generally used in the left-hand traffic system. In this case, the right and left lamp units 10R, 10L form the individual low beam light distribution patterns LoR, LoL, which have substantially the same shape, by using the rotary shades 12R, 12L. Accordingly, the combined low beam light distribution pattern LoC, which is formed by superimposing the individual low beam light distribution patterns LoR, LoL, has similar shape as those of the individual low beam light distribution patterns LoR, LoL. In Fig. 5, the individual low beam light distribution patterns LoR, LoL are illustrated so as to be slightly different in size to show that the individual low beam light distribution patterns LoR, LoL are superimposed. However, the individual low beam light distribution patterns LoR, LoL may have completely the same size. In this case, since the individual low beam light distribution pattern LoR formed by the right lamp unit 10R overlaps with the individual low beam light distribution pattern LoL formed by the left lamp unit 10L, the illuminance of the combined low beam light distribution pattern LoC is equal to the sum of the illuminance of the individual low beam light distribution pattern LoR and the illuminance of the individual low beam light distribution pattern LoL. The combined low beam light distribution pattern LoC is a standard low beam light distribution pattern that is designed so as not to produce a glare to oncoming vehicles, preceding vehicles, or pedestrians when traveling in the left-hand traffic system.

In Fig. 5, (b) illustrates a left-side high beam combined light distribution pattern HiCL. The left-side high beam combined light distribution pattern HiCL is for irradiating a high beam only on the traveling lane side in the left-hand traffic system, and is a special high beam light distribution pattern (one-side high light distribution pattern). In this case, the individual low beam light distribution pattern LoR is formed by using the rotary shade 12R, and the individual high beam light distribution pattern HiL is formed by using the rotary shade 12L. The left-side high combined light distribution pattern HiCL is formed by superimposing these individual light distribution patterns LoR, HiL. When the left-side high combined light distribution pattern HiCL is formed, the left side region in front of the vehicle 100 is irradiated with high beam, and the right side region in front of the vehicle 100 is irradiated with low beam. The left-side high combined light distribution pattern HiCL is preferably used when preceding vehicles and pedestrians do not exist on the traveling lane but oncoming vehicles or pedestrians exist in the opposing lane in the left-hand traffic system, thereby improving visibility by high beam irradiation on the traveling lane side without producing a glare to oncoming vehicles or pedestrians on the opposing lane side.

In Fig. 5, (c) illustrates a right-side high beam combined light distribution pattern HiCR. The right-side high beam combined light distribution pattern HiCR is for irradiating a high beam only on the opposing lane side in the left-hand traffic system, and is another special high beam light distribution pattern (another one-side high light distribution pattern). In this case, the individual high beam light distribution pattern HiR is formed by using the rotary shade 12R, and the individual low beam light distribution pattern LoL is formed by using the rotary shade 12L. The right-side high combined light distribution pattern HiCR is formed by superimposing these individual low beam light distribution patterns HiR, LoL. When the right-side high combined light distribution pattern HiCR is formed, the right side region in front of the vehicle 100 is irradiated with high beam, and the left side region in front of the vehicle 100 is irradiated with low beam. The right-side high combined light distribution pattern HiCR is preferably used when preceding vehicles or pedestrians exist on the traveling lane but oncoming vehicles and pedestrians do not exist in the opposing lane in the left-hand traffic system, thereby improving visibility by irradiating a high beam on the opposing lane side without producing a glare to preceding vehicles or pedestrians on the traveling lane.

In the left-side high combined light distribution pattern HiCL and the right-side high combined light distribution pattern HiCR, only a portion where the respective individual light distribution patterns overlap with each other, that is, only a portion corresponding to the combined low beam light distribution pattern has the sum of the illuminance of the individual beam light distribution patterns, thereby becoming bright. The additional one-side high beam portion, which is formed above the portion corresponding to the combined low beam light distribution pattern, has illuminance provided by one of the right and left lamp units 10R, 10L.

In Fig. 5, (d) shows a combined high beam light distribution pattern HiC. In this case, individual high beam light distribution patterns FR, FL are formed by the right and left lamp units 10R, 10L by using the rotary shades 12R, 12L. The combined high beam light distribution pattern HiC is formed by superimposing the individual high beam light distribution patterns FR, FL to provide an irradiation region in a wide range in front of the vehicle 100. In this case, the right and left lamp units 10R, 10L form the individual high beam light distribution patterns FR, FL, which have substantially the same shape, by using the rotary shades 12R, 12L. Accordingly, the combined high beam light distribution pattern HiC, which is formed by superimposing the individual high beam light distribution patterns FR, FL, has the same shape as those of the individual high beam light distribution patterns. In Fig. 5, (d) illustrates that the individual high beam light distribution patterns FR, FL are superimposed. In this case, since the individual high beam light distribution pattern FR formed by the right lamp unit 10R overlaps with the individual high beam light distribution pattern FL formed by the left lamp unit 10L, the illuminance of the combined high beam light distribution pattern HiC is equal to the sum of the illuminance of the individual high beam light distribution pattern FR and the illuminance of the individual high beam light distribution pattern FL.

The combined light distribution patterns to be formed by the right and left lamp units 10R, 10L is not limited to the light distribution patterns described above. For example, the right-side individual high beam light distribution pattern HiR may be formed by using the rotary shade 12R, and the left-side individual high beam light distribution pattern HiL may be formed by using the rotary shade 12L. In this case, it is possible to form a light distribution pattern, which has a U shape as a whole, by swiveling the right and left lamp units 10R, 10L in separating directions, thereby forming a split combined light distribution pattern having a light blocked region only in an area where a vehicle ahead exists above the horizontal line.

In another example, the pattern determining section 80 may form an individual low beam light distribution pattern having a cutoff line, a middle portion of which being inclined upward toward the left, by using the left lamp unit 10L, and another individual low beam light distribution pattern having a cutoff line, a middle portion of which being inclined upward toward the right, by using the right lamp unit 10R, thereby forming a V-beam combined light distribution pattern that includes a V-shaped light blocked region substantially in the middle above the horizontal line. These combined light distribution patterns may be achieved by providing shade plates, which have the shapes corresponding to the individual light distribution patterns formed by the respective lamp units, on the respective rotary shades 12R, 12L.

By switching the combined light distribution patterns, which are formed by the right and left lamp units 10R, 10L, based on the detection result of the vehicle ahead as described above, it is possible to ensure distant visibility while reducing a glare to a vehicle ahead. However, when there is a curve ahead of the vehicle 100 or when the vehicle 100 is traveling on a curved road, a vehicle ahead may not be covered an image capturing range of a camera depending on the position of the vehicle ahead. In such a case, switching to an appropriate combined light distribution pattern may be delayed due to a delay in the detection of the vehicle ahead, and may result in producing a glare to the vehicle ahead. Even when the vehicle ahead traveling on a curve is detected early, if the curve is sharp, the vehicle ahead moves fast in the lateral direction when observed from the vehicle 100, in which case the switching to an appropriate combined light distribution pattern may be delayed, and may produce a glare to the vehicle ahead. The risk of producing a glare to the vehicle ahead becomes higher as the curvature of the curve increases.

Accordingly, in the first exemplary embodiment, while the vehicle 100 is traveling on a curved road, a combined light distribution pattern is switched to a light distribution pattern that is less likely to produce a glare to a vehicle ahead regardless of whether a vehicle ahead exists, thereby reducing a risk of producing a glare due to the delay of the detection of the vehicle ahead.

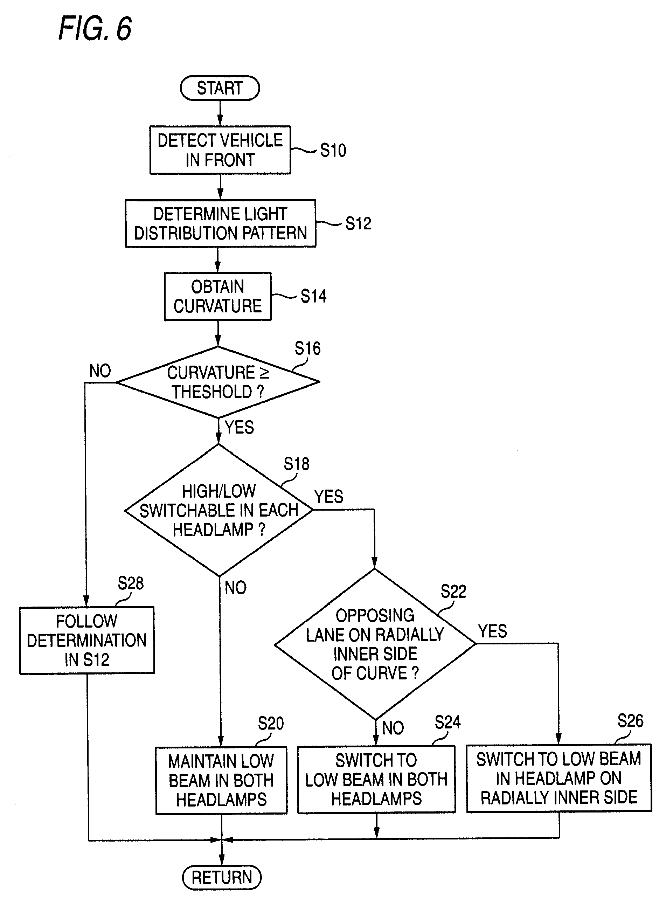

Fig. 6 is a flowchart illustrating an irradiation control that is performed by the irradiation control unit 74 according to the first exemplary embodiment.

First, the vehicle position detecting section 76 detects a vehicle ahead by processing an image of the vehicle ahead (S10). The pattern determining section 80 selects an optimum combined light distribution pattern in accordance with whether the vehicle ahead exists and the position of the vehicle ahead if the vehicle ahead exists (S12). The curve judging section 82 calculates a curvature of a road, on which the vehicle 100 is traveling, based a steering angle and a vehicle speed, or the information received from the navigation system 114 (S14). The steps S10 to S14 may not be in this order. For example, the step S 14 may be executed before the step 10.

The curve judging section 82 judges whether the curvature calculated in S 14 is equal to or larger than a threshold R_{A} (S16). If the curvature is smaller than R_{A} (S16; No), it is considered that the likelihood of the detection of the vehicle ahead being delayed is low. Accordingly, the pattern restricting section 88 instructs the pattern control section 84 to form the combined light distribution pattern that is selected in S12 (S28). That is, in this case, the right and left lamp units form the combined light distribution pattern in the same manner as when the vehicle 100 is traveling on a straight road.

If the curvature is equal to or larger than R_{A} in S16 (S16; Yes), the pattern restricting section 88 judges whether the switching between the high beam and the low beams can be carried out in each of the lamp units (S 18). If the switching between the high beam and the low beams cannot be carried out (S 18; No), the combined low beam light distribution pattern is formed (S20). If the switching between the high beam and the low beams can be carried out (S 18; Yes), the pattern restricting section 88 judges whether the radially inner side of the curve is on a side of the opposing lane based on the direction of the curve (S22). In the left-hand traffic system, this is equivalent to judging whether the road is curved to the right. If the radially inner side of the curve is on the side of the opposing lane (S22; Yes), the pattern restricting section 88 instructs the pattern control section 84 to form the individual low beam light distribution pattern with the lamp unit that is closer to the radially inner side of the curve, that is, closer to the opposing lane, regardless of the selection made in the pattern determining section 80 (S26). The other lamp unit that is closer to a radially outer side of the curve may form, for example, the one-side high light distribution pattern. Therefore, the likelihood of producing a glare to the vehicle ahead by the individual light distribution pattern formed by the lamp unit disposed closer to the radially inner side (the right lamp unit 10R in the left-hand traffic system) is reduced.

If the radially inner side of the curve is not on the side of the opposing lane (S22; No), the pattern restricting section 88 instructs the pattern control section 84 to form individual low beam light distribution patterns with both of the right and left lamp unit, regardless of the selection made in the pattern determining section 80 (S24). In this case, the combined low beam light distribution pattern is formed.

As described above, when the curvature is equal to or larger than the threshold, the lamp unit that forms the individual low beam light distribution pattern is changed depending on whether the radially inner side of the curve is on the side of the opposing lane. The reason therefor is as follows. In the left-hand traffic system for example, when traveling on a road that is curved to the right, the likelihood of producing a glare to a vehicle ahead due to the individual high beam light distribution pattern formed by the left lamp unit is low. Accordingly, in terms of ensuring distant visibility, it is preferable that the left lamp unit do not form the individual low beam light distribution pattern. In contrast, when traveling on a road that is curved to the left, both of the individual high beam light distribution patterns formed by the right and left lamp units are likely to produce a glare to the vehicle ahead. Accordingly, each of the right and left lamp units is controlled to form the individual low beam light distribution pattern.

The pattern restricting section 88 may instruct the pattern control section 84 to form the individual low beam light distribution pattern with the lamp unit that is closer to the radially inner side of the curve, without judging whether the radially inner side of the curve is on the side of the opposing lane. The pattern restricting section 88 may instruct the pattern control section 84 to form the individual low beam light distribution pattern with the lamp unit that is closer to the opposing lane side, without judging whether the radially inner side of the curve is on the side of the opposing lane.

According to the first exemplary embodiment, when the curvature of the curved road on which the vehicle 100 is traveling is equal to or larger than the threshold, the combined light distribution pattern that is less likely to produce a glare to a vehicle ahead is selected, regardless of whether a vehicle ahead exists or the position of the vehicle ahead. Accordingly, it is possible to reduce a glare that is caused by the delay of the detection of the vehicle ahead. Further, one combined light distribution pattern is maintained while traveling on the curved road. Accordingly, the combined light distribution pattern is not switched in a short time due to, for example, change in the detection result of the oncoming vehicle before and after the vehicle 100 and the oncoming vehicle pass each other. Therefore, it is possible to prevent a feeling of discomfort from being given to a driver of the vehicle 100.

### Second Exemplary Embodiment

In the first exemplary embodiment, the combined light distribution pattern to be formed is determined by judging whether the road on which the vehicle 100 is traveling is a curved road. In a second exemplary embodiment, the judgment of the curve is performed before the vehicle 100 enters the curve.

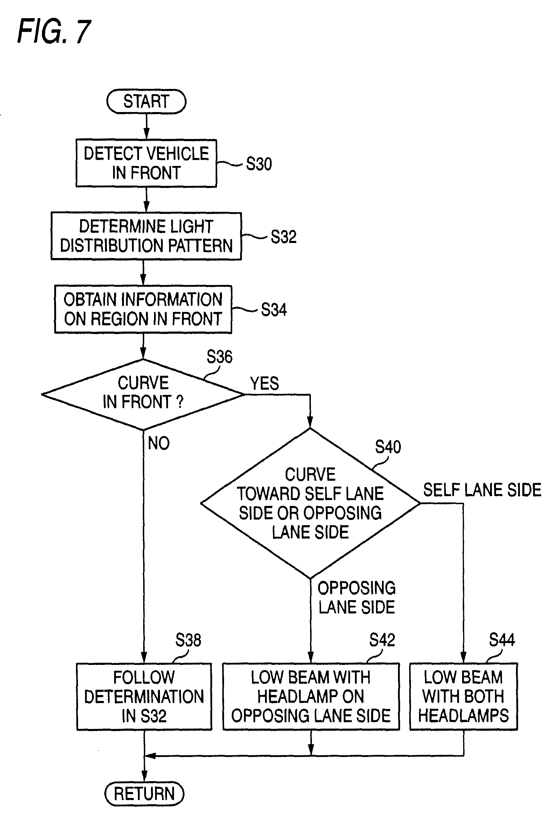

Fig. 7 is a flowchart illustrating an irradiation control that is performed by the irradiation control unit 74 according to the second exemplary embodiment.

First, the vehicle position detecting section 76 detects a vehicle ahead by processing an image of the vehicle ahead (S30). The pattern determining section 80 selects an optimum combined light distribution pattern depending on whether the vehicle ahead exists and the position of the vehicle ahead if the vehicle ahead exists (S32). The curve judging section 82 obtains information about a position ahead of the vehicle 100, based on road geometry information obtained from the navigation system 114 or by analyzing images captured by the camera 108 (S34). The position ahead of the vehicle 100 may be designated by a distance (for example, 100 meters) from the front portion of the vehicle 100, or may be designated by a traveling time from the present time (for example, 3 seconds). The steps S30 to S34 may be in this order. For example, the step 34 may be executed before the step S30.

The curve judging section 82 judges whether a curve exists ahead of the vehicle 100 (S36). If a curve does not exist ahead of the vehicle 100 (S36; No), the pattern restricting section 88 instructs the pattern control section 84 to form the combined light distribution pattern that is selected in S32 (S38). If a curve exists ahead of the vehicle 100 (S36; Yes), the pattern restricting section 88 judges whether the radially inner side of the curve is on a side of the traveling lane or the radially inner side of the curve is on a side of the opposing lane (S40). In the left-hand traffic system, this is equivalent to judging whether the road is curved to the left or to the right.

If it is judged that the radially inner side of the curve is on the side of the traveling lane in S40, the pattern restricting section 88 instructs the pattern control section 84 to form the individual low beam light distribution patterns with both of the right and left lamp units regardless of the selection made in the pattern determining section 80 (S44). In this case, the combined low beam light distribution pattern is formed. If it is judged that the radially inner side of the curve is on the side of the opposing lane in S40, the pattern restricting section 88 instructs the pattern control section 84 to form the individual low beam light distribution pattern with the lamp unit that is closer to the opposing lane (closer to the radially inner side of the curve) and to form an individual high beam light distribution pattern with the other lamp unit that is closer to an outer side of the traveling lane (closer to a radially outer side of the curve), regardless of the selection made the pattern determining section 80 (S42). Accordingly, it is possible to reduce the likelihood of producing a glare to the vehicle ahead, particularly, to an oncoming vehicle by the individual light distribution pattern formed by the lamp unit disposed closer to the opposing lane, while ensuring distant visibility by a high beam from the lamp unit disposed closer to the outer side of the traveling lane.

As described above, in the second exemplary embodiment, when a curve exists ahead of the vehicle, the combined light distribution pattern that is less likely to produce a glare to a vehicle ahead is selected before the vehicle 100 enters the curve, regardless of whether a vehicle ahead exists and the position of the vehicle ahead. Accordingly, it is possible to reduce a glare that is caused by the delay of the detection of the vehicle ahead. Further, one combined light distribution pattern is maintained while traveling on the curved road. Accordingly, the combined light distribution pattern is not switched in a short time due to, for example, change in the detection result of the oncoming vehicle before and after the vehicle 100 and the oncoming vehicle pass each other. Therefore, it is possible to prevent a feeling of discomfort from being given to a driver of the vehicle 100.

### Third Exemplary Embodiment

In the first exemplary embodiment, while the vehicle 100 is traveling on a curved road, the combined light distribution pattern that is less likely to produce a glare to a vehicle ahead is formed. However, when the road is continuously curved to the right and to the left, the individual high beam light distribution pattern may be turned on and off repetitively with the right and left lamp units. An irradiation control according to a third exemplary embodiment addresses this repetitive switching that may occur when the road is continuously curved.

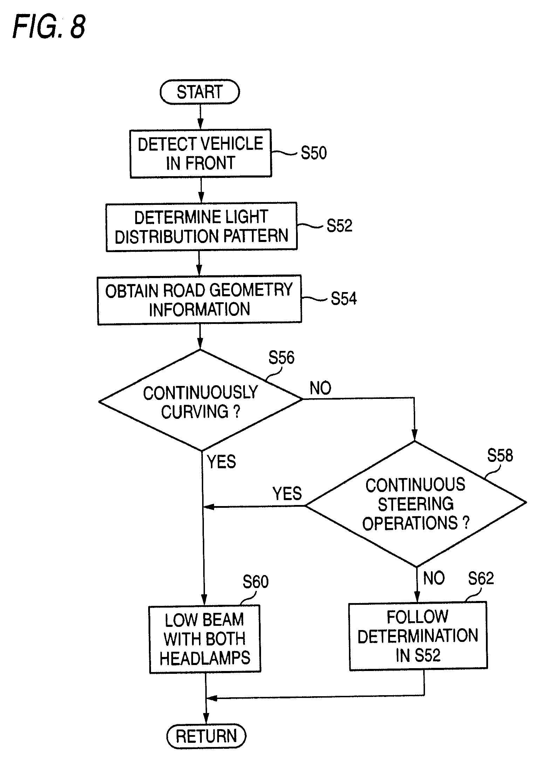

Fig. 8 is a flowchart illustrating the irradiation control that is performed by the irradiation control unit 74 according to the third exemplary embodiment.

First, the vehicle position detecting section 76 detects a vehicle ahead by processing an image of the vehicle ahead (S50). The pattern determining section 80 selects an optimum combined light distribution pattern depending on whether the vehicle ahead exists and the position of the vehicle ahead if the vehicle ahead exists (S52). The curve judging section 82 obtains information about road geometry ahead of the vehicle 100 (for example, a range of 1 km ahead) from the navigation system 114 (S54). The steps S50 to S54 may not be in this order. For example, the step S54 may be executed before the step S50.

The curve continuity judging section 86 of the curve judging section 82 judges whether there is a series of curves by analyzing the road geometry information (S56). The series of curves may be determined based on a ratio (for example, 70% or more) of sections of the road that has a curvature equal to or larger than a threshold in a certain range ahead of the vehicle 100, or based on the number of corners (for example, 5 or more) having a curvature equal to or larger than a threshold that exist in a certain range ahead of the vehicle 100. If there is a series of curves (S56; Yes), the pattern restricting section 88 instructs the pattern control section 84 to form the individual low beam light distribution patterns with both of the right and left lamp units regardless of the selection made by the pattern determining section 80 during a given period of time (for example, until the vehicle 100 completely travels through in the certain range, or for predetermined seconds) (S60). If there are no series of curves (S56; No), the curve continuity judging section 86 judges whether the right and left switching of the steering direction is continuous (for example, three times or more) in a given period of time (for example, for the last 20 seconds) until the present time (S58). If the switching of the steering direction is continuous (S58; Yes), the pattern restricting section 88 instructs the pattern control section 84 to form the individual low beam light distribution patterns with both of the right and left lamp units (S60). If the switching of the steering direction is not continuous (S58; No), the pattern restricting section 88 instructs the pattern control section 84 to form the combined light distribution pattern that is selected in S52 (S62).

As described above, according to the third exemplary embodiment, the individual low beam light distribution patterns are formed by the right and left lamp units when there is a series of curves, thereby avoiding a situation where the individual high beam light distribution patterns are repetitively turned on and off in the right and left lamp units, and preventing a glare to a vehicle ahead. Further, even if it is judged that there are no series of curves, the individual low beam light distribution patterns are formed by the right and left lamp units if the switching of the steering direction is continuous. The latter case may be, for example, a case where corners having a curvature smaller than a threshold are continuous, or a case where a driver frequently changes the lane.

### Fourth Exemplary Embodiment

A case where an adaptive front-lighting system (AFS) and the switching of a combined light distribution pattern based on the detection of a vehicle ahead are used together will be described in a fourth exemplary embodiment. The adaptive front-lighting system changes the irradiation direction of a headlamp so as to irradiate a region ahead in the traveling direction while traveling on a curved road.

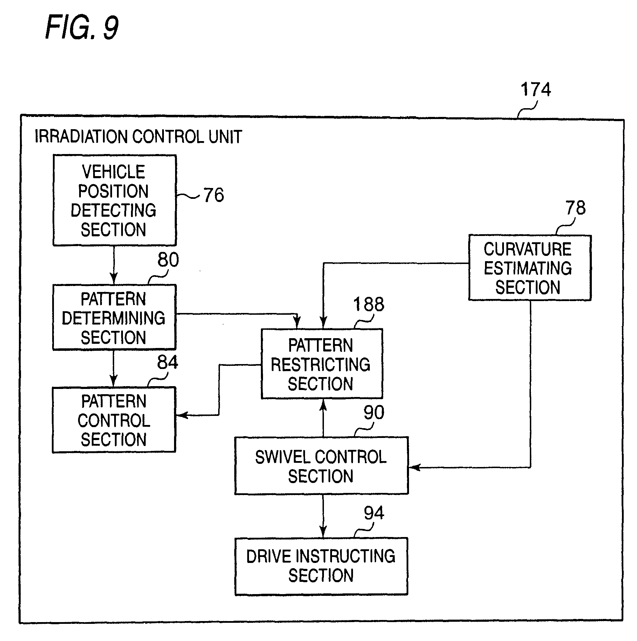

In the fourth exemplary embodiment, the mechanical structures of the headlamps and other configuration of the vehicle on which the headlamps are mounted are the same as those of the first exemplary embodiment. The fourth exemplary embodiment is different from the first exemplary embodiment in that the irradiation control unit is configured to function in a different manner. Fig. 9 is a functional block diagram of an irradiation control unit 174 according to the fourth exemplary embodiment. A vehicle position detecting section 76, a pattern determining section 80, a pattern control section 84, and a curvature estimating section 78 have similar functions as those described with reference to Fig. 4.

A swivel control section 90 determines a swivel angle α of each lamp unit for brightening a point of gaze, which is an arrival position of the vehicle after several seconds, on the basis of the curvature estimated by the curvature estimating section 78. The swivel angle α is determined for each of the right and left lamp units. The swivel angle α may represented by a positive angle in the swivel direction toward the opposing lane from the direction of the optical axis of the lamp unit that corresponds to 0°. The swivel control section 90 instructs a drive instructing section 94 to swivel each lamp unit by the swivel angle α. The drive instructing section 94 controls the swivel actuators 222R, 222L so that the right and left lamp units 10R, 10L swivel by the swivel angle α. Since the determination of the swivel angle is well known in the filed of AFS, the detailed description of the determination of the swivel angle will be omitted.

A pattern restricting section 188 judges whether an swivel angle α determined for the lamp unit disposed closer to the opposing lane is equal to or larger than a threshold β. The threshold β is a limit angle where the lamp unit disposed closer to the opposing lane does not produce a glare to the vehicle ahead while traveling on a curved road, and is set on the basis of experiments or the like. If the absolute value of the swivel angle α is equal to or larger than the threshold β, the pattern restricting section 188 restricts the selection of a high beam light distribution pattern in at least one of the lamp units while traveling on the curved road regardless of the light distribution pattern that is determined by the pattern determining section 80.

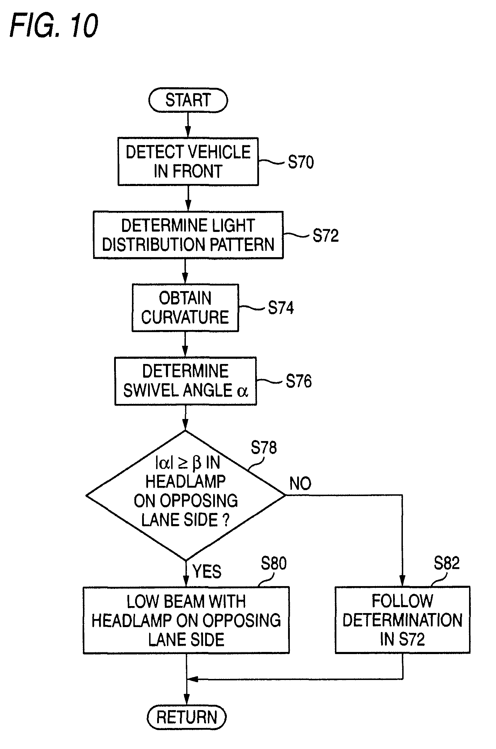

Fig. 10 is a flowchart illustrating an irradiation control that is performed by an irradiation control unit 74 according to the fourth exemplary embodiment.

First, the vehicle position detecting section 76 detects a vehicle ahead by processing an image of the vehicle ahead (S70). The pattern determining section 80 selects an optimum combined light distribution pattern, e.g., one-side high light distribution pattern, depending on whether the vehicle ahead exists and the position of the vehicle ahead if the vehicle ahead exists (S72). The curve judging section 82 calculates the curvature of the road on which the vehicle 100 is traveling, based on a steering angle and a vehicle speed, an image of the vehicle ahead that is captured by a camera 108, or information from the navigation system 114 (S74). The swivel control section 90 determines the swivel angles of the right and left lamp units on the basis of the curvature of the road (S76). The steps S70 to S76 may not be in this order. For example, the steps S74 and S76 may be executed before the steps S70 and S72.

The pattern restricting section 188 judges whether α ≥ β is satisfied for the lamp unit that is disposed closer to the opposing lane (S78). If α ≥ β is satisfied (S78; Yes), the pattern restricting section 188 instructs the pattern control section 84 to form the individual low beam light distribution pattern with the lamp unit disposed closer to the radially inner side of the curve, that is, closer to the opposing lane regardless of the selection made by the pattern determining section 80 (S80). If α < β (S78; No), the pattern restricting section 88 instructs the pattern control section 84 to form the combined light distribution pattern that is selected in S72 (S82).

As described above, when the vehicle headlamp apparatus has the AFS, the vehicle headlamp apparatus switches the combined light distribution pattern depending on the swivel angle. The reason therefor is as follows. In the left-hand traffic system for example, when a light distribution pattern is swiveled toward the left by the AFS, the likelihood of producing a glare to a vehicle ahead by the right lamp unit (disposed closer to the opposing lane side) is low. In contrast, when the light distribution pattern is swiveled toward the right by the AFS, the likelihood of producing a glare to an oncoming vehicle on the opposing lane by the right lamp unit is high regardless of whether the road is curved to the right or to the left. Thus, when a rightward swivel angle α (swivel angle toward the opposing lane) calculated for the right lamp unit is equal to or more than the threshold β, the right lamp unit is controlled to form the individual low beam light distribution pattern.

Instead of comparing the swivel angle α with the threshold β, the pattern restricting section 188 may judge whether the swivel angle α of the lamp unit disposed closer to the opposing lane is an inward angle with respect to the curve, that is a swivel angle toward the center of the curve, and the lamp unit disposed closer to the opposing lane may be controlled to form the individual low beam light distribution pattern if it is judged that the swivel angle [alpha] of the lamp unit disposed closer to the opposing lane is an inward angle. This is a case, for example, where the right lamp unit is swiveled toward the right on while traveling on a road that is curved to the right in the left-hand traffic system.

### Example useful for understanding the invention

The example useful for understanding the invention illustrates, that a vehicle headlamp apparatus 230 changes a combined light distribution pattern to be formed the lamp unit depending on a condition of a road surface.

In general, when a road surface is wet in a rainy weather or the like, it becomes difficult for a driver to visually recognize lane marks. This difficulty particularly becomes significant at night. The reason for this is that the reflectance of a lane mark is increased due to the wet road surface and the amount of light retro-reflected to the headlamp is decreased. Under the rainy weather, a lane mark also becomes difficult to be captured in an image that is taken by an on-vehicle camera.

The road surface condition is estimated on the basis of the level of the appearance of the lane mark in the image captured by the camera, and the vehicle headlamp apparatus 230 is controlled so that the lane mark becomes more recognizable when the road surface is wet.

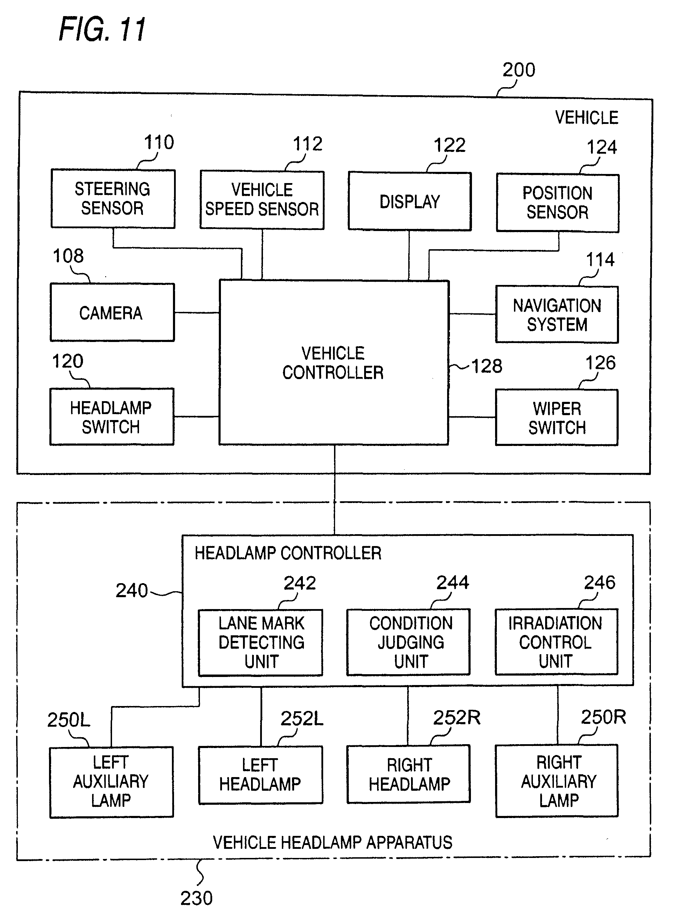

Fig. 11 is a functional block diagram illustrating a configuration of the vehicle headlamp apparatus 230 according to this example and other configurations of the vehicle 200 on which the vehicle headlamp apparatus 230 is mounted.

The vehicle 200 includes a headlamp switch 120 that is used to turn on and off the headlamps, a display 122 that informs a driver of lighting condition of the headlamps, a position sensor 124 that detects the position of a shift lever, and a wiper switch 126 that is used to turn on and off a wiper (not shown), in addition to the camera 108, the steering sensor 110, the vehicle speed sensor 112, and the navigation system 114 that are described with reference to Fig. 3.

The vehicle headlamp apparatus 230 includes right and left headlamps 252R, 252L that have similar structure as those of the headlamps 210R, 210L described with reference to Fig. 3. However, in Fig. 11, a headlamp controller 240 is provided separately from the headlamps 252R, 252L. The vehicle headlamp apparatus 230 further includes right and left auxiliary lamps 250R, 250L. These auxiliary lamps are installed at appropriate positions and the directions of the optical axes of the auxiliary lamps 250R, 250L are set so that lane marks on both sides of the lane on which the vehicle 200 is traveling are irradiated. It is preferable that a halogen bulb, a xenon bulb, a LED, and the like be used as a light source for each of the auxiliary lamps 250R, 250L, and the color of irradiation light be white or yellow.

The headlamp controller 240 includes a lane mark detecting unit 242, a condition judging unit 244, and an irradiation control unit 246. The lane mark detecting unit 242 detects lane marks from the image that is captured by the camera 108. Since the technique for detecting a lane mark is well known, a detailed description thereof will be omitted. The lane mark detecting unit 242 judges whether a road surface is wet on the basis of the definition of the lane mark.

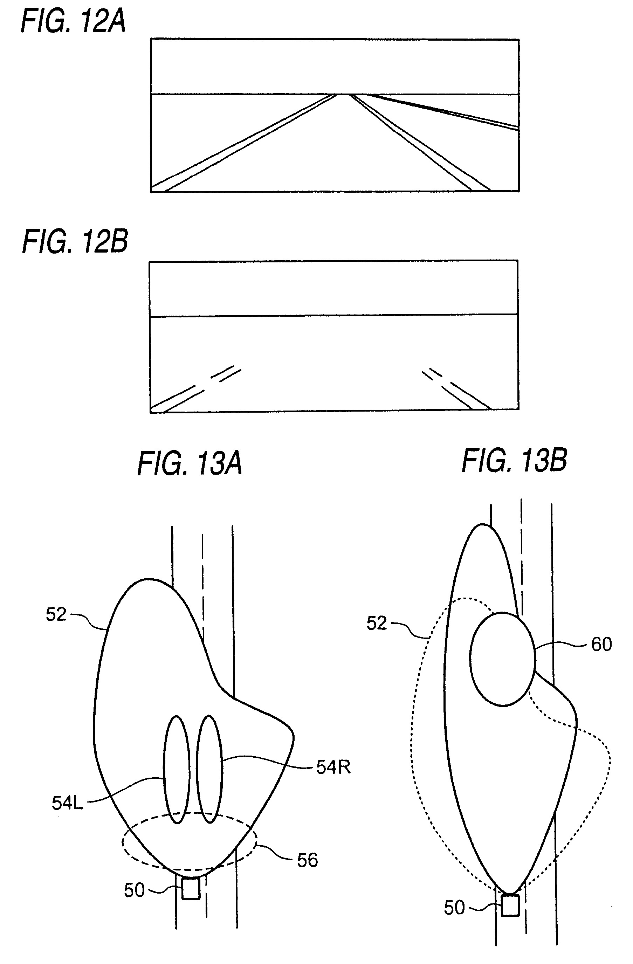

Fig. 12A and 12B are diagrams for explaining the judgment of the road surface condition that is performed by the lane mark detecting unit 242. Fig. 12A illustrates an example of the detection of the lane marks when the road surface is dry. The lane marks are clearly detected as shown in Fig. 12A. Fig. 12B illustrates an example of the detection of the lane marks when the same road surface is wet. A part of the lane marks are not detected due to the reflection as shown in Fig. 12B. With respect to the lane marks detected on a normal road with a dry road surface, a ratio of the number of pixels of the lane marks to the number of pixels of the entire image, or the length of the lane marks may be set as a reference value. In a case is which is the reference ratio is set, it is judged that the road surface is wet if the lane marks detected while traveling is equal to or lower than the reference ratio. It is preferable that this ratio be set on the basis of the comparison of retro-reflected light between a dry road surface condition and a wet road surface condition.

An image used for the detection of the lane marks may be an image captured by a camera for a back guide monitor or a camera for a back view, which is disposed on the rear portion of the vehicle 200, instead of the camera 108 that takes an image of a region ahead of a vehicle.

If it is judged that a road surface is wet, the condition judging unit 244 judges whether the following conditions are met.
1. The headlamp switch 120 is turned on.
2. Vehicle speed is equal to or higher than a given speed (for example, 50 km/h).
3. The position sensor 124 shows that the vehicle is traveling forward.
4. The wiper switch 126 is turned on.

If all of the conditions are met, the condition judging unit 244 instructs the irradiation control unit 246 to improve the visibility of the lane marks. In another example, one or more of the conditions may not be considered. In yet another example, the condition judging unit 244 instructs the irradiation control unit 246 to improve the visibility of the lane marks when a road surface is wet, without judging any of the conditions listed above.

In response to the instruction from the condition judging unit 244, the irradiation control unit 246 improves the visibility of lane marks by executing, for example, one of the following controls.

Fig. 13A is a diagram illustrating an example of a control in which the irradiation control unit 246 turns on the auxiliary lamps 250R, 250L. An irradiation range 52 illustrated in Fig. 13A is an irradiation range of the combined low beam light distribution pattern. The auxiliary lamps 250R, 250L have elongated irradiation ranges 54R, 54L so as to irradiate a long range of lane marks on right and left of a vehicle 50 when turned on. In another example, the vehicle headlamp apparatus may include auxiliary lamps that irradiate a wide range 56 relatively close to the vehicle 500 in front of the vehicle 50. In another example, fog lamps may be used as auxiliary lamps.

Fig. 13B is a diagram illustrating a control in which the irradiation control unit 246 condenses a diffused pattern of the low beam. In this example, each of the right and left headlamps 252R, 252L includes a condensing lens, and the condensing lens is adapted to be moved to a position on the optical axis of each lamp unit in accordance with the instruction from the irradiation control unit 246. When the condensing lens is moved to the position on the optical axis, the irradiation range 52 of the combined low beam light distribution pattern is focused to a narrower range 60. Accordingly, illuminance is improved at a relatively distant region, so that it is possible to improve visibility of the lane marks in the distant region. The condition judging unit 244 may execute this control only when the vehicle is traveling at a medium to high speed (for example, 60 km/h or more).

The vehicle headlamp apparatus 230 may not necessarily include the auxiliary lamps. In this case, when it is judged that a road surface is wet, the irradiation control unit 246 may perform leveling adjustment to tilt the lamp unit 10 to be in the forwardly inclined orientation by driving the leveling actuator 226 so as to downwardly incline the optical axis. Accordingly, a relatively close region is irradiated, so that the visibility of lane marks is improved when a vehicle is traveling at a low speed (for example, a speed lower than 50 km/h).

Instead of the lamp unit shown in Fig. 1, for example, a lamp unit having a plurality of light emitting devices as a light source may be used. Each of the light emitting devices may include a light emitting chip such as a white light emitting diode. According to this the lamp unit, a combined low beam light distribution pattern is formed by superimposing light distribution patterns, which are formed by the plurality of light emitting devices. For example, the combined low beam light distribution pattern may be formed by superimposing a diffused light distribution pattern having an irradiation range that is close to the vehicle, a medium diffused light distribution pattern having an irradiation range in a distant region, and a condensed light distribution pattern having an irradiation range focused at a portion of lane marks in the distant region. In this case, the irradiation control unit 246 may increase the voltage applied to the light emitting devices that form the diffused light distribution pattern and the medium diffused light distribution pattern when the vehicle is traveling at a low speed (for example, a speed lower than 50 km/h), and may increase the voltage applied to the light emitting devices that form the medium diffused light distribution pattern and the condensed light distribution pattern when the vehicle is traveling at a high speed (for example, 50 km/h or more). By changing the light emitting devices with respect to which the applied voltage is increased in accordance with a vehicle speed, it is possible to improve visibility of the lane marks in a range suitable for the vehicle speed.

When the lane marks cannot be detected due to snow for example, it is preferable that control be stopped by turning off the headlamp switch 120 so that the auxiliary lamp are not inappropriately turned on the irradiation range is not inappropriately changed.

A vehicle may have an infrared irradiation function for the camera 108 so that lane marks are easily detected by the camera 108. When the lane marks are not clear due to wear or the lane marks being flooded, the lane marks becomes more easily to be captured by the camera due to the infrared irradiation.

The lane mark detecting unit may judge the road surface condition by detecting an object other than the lane marks, e.g., lane dividing indicators such as Botts' dots.

Further, the vehicle headlamp apparatus may obtain information about whether lane marks exist on the road on which the vehicle is traveling, from the navigation system. Furthermore, if lane marks do not exist on a road, the condition judging unit may judge the road surface condition on the basis of whether the wiper switch is turned on or information from a separately installed raindrop sensor instead of the detection using image processing.

According to the example the control of the vehicle headlamp apparatus is changed depending on the road surface condition as described above. Accordingly, it is possible to improve visibility when it is raining or the road surface is flooded.

In the exemplary embodiments described above, the switching control of the combined light distribution pattern is executed when the vehicle is traveling on a road that is curved. In another example, similar control may be performed when the vehicle is traveling on an uphill road. In this case, the irradiation control unit includes an uphill road judging unit (not shown) that detects an uphill, and an uphill pattern restricting unit (not shown). The uphill road judging unit receives an image of a road in front that is captured by a camera 108, and detects lane marks, typically white lines, using well-known image processing. Further, whether a road is a flat road or an uphill road is judged based on a gap between the lane marks on right and left of the vehicle.

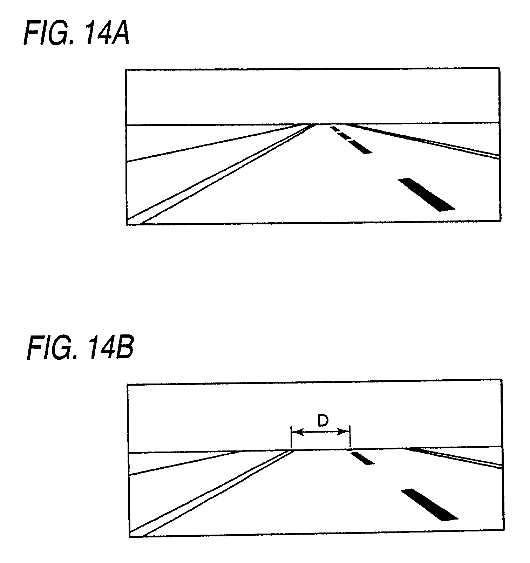

Figs. 14A and 14B are typical images of a flat road and an uphill road that are processed by an uphill road judging unit. Fig. 14A illustrates an image of a flat road, in which the lane marks are substantially converging at one point in the distance. In contrast, Fig. 14B illustrates an image of an uphill road, in which the lane marks are cut in the middle since a region beyond an apex of the uphill road cannot be observed from the vehicle. Accordingly, the uphill road judging unit calculates a gap D between the lane marks at a given position (for example, along the horizontal center line) in the image, and judges that a road is an uphill road if the gap D is equal to or larger than a predetermined value.

While the vehicle is traveling on the uphill road, the uphill pattern restricting unit instructs the pattern control section to maintain the light distribution pattern that is selected by the pattern determining section at the time of detection of a preceding vehicle, even if the preceding vehicle is no more detected.

If the control of the switching of the combined light distribution pattern while traveling on the uphill road is not performed, the following situation may occur. That is, if a preceding vehicle is detected by the vehicle position determining section while the vehicle is traveling on an uphill road, one-side high combined light distribution pattern is selected by the pattern determining section and is irradiated. Since the preceding vehicle disappears from the field of view of the camera when the preceding vehicle travels over the apex of an uphill road, a combined high beam light distribution pattern is selected by the pattern determining section and is irradiated. After that, if the vehicle also travels over the apex of the uphill road, the preceding vehicle is detected again. Accordingly, the one-side high combined light distribution pattern is selected. Since the light distribution patterns may frequently be switched before and after a vehicle travels over the apex of the uphill road as described above, a feeling of discomfort is given to the driver. Thus, while traveling on an uphill road, by maintaining the light distribution pattern that is selected by the pattern determining section at the time of detection of the preceding vehicle even if the preceding vehicle becomes undetectable, frequent switching of the light distribution pattern at the time of traveling over the uphill road can be prevented. When an oncoming vehicle appears while traveling on an uphill road, an appropriate one-side high combined light distribution pattern is selected and irradiated. Alternatively, while traveling on an uphill road, the uphill pattern restricting unit may perform a control to continuously form the combined low beam light distribution pattern regardless of whether a vehicle ahead exists. In this way, it is also possible to prevent the frequent switching of the light distribution pattern at the time of traveling over the uphill road.

In each of the exemplary embodiments described above, the vehicle position detecting section searches the feature points, which represent a vehicle ahead, from the data of the image captured by the camera. In this respect, the vehicle position detecting section may limit the range of search of a vehicle ahead. Specifically, the vehicle position detecting section detects lane marks, typically white lines, from the image data by well-known image processing. On the basis of the configuration of the lane marks, it can be judged whether the road ahead is straight, curved to the right, or curved to the left. Then, the search range of a vehicle ahead is changed in accordance with the result of this judgment. That is, if the road is straight, the search range may is limited to the middle region of the image is. If the road is curved to the right or to the left, the search range may be limited to right or left region of the image. If the search range is limited, time required to detect a vehicle ahead is shortened. Accordingly, the switching of the combined light distribution pattern according to the position of a vehicle ahead becomes faster.

Instead of limiting the search range of a vehicle ahead, the middle region, the right region, or the left region of the image may be set as a priority search range of the vehicle ahead in accordance with the result of the judgment of the geometry of a road. That is, first, the search for a vehicle ahead is performed in the priority search range. If a vehicle ahead is detected, the search is completed in the priority search range. If the vehicle ahead is not detected, the search continues to be performed in a region other than the priority search range. Accordingly, when a vehicle ahead exists in the search range, time required to detect the vehicle ahead is shortened and it is also be possible to thoroughly detect a vehicle ahead, which exists around the perimeter of the image.

In each of the exemplary embodiments described above, the curvature estimating section calculates the curvature of the road on which the vehicle is traveling on the basis of the steering angle or the information from the navigation system. However, the curvature estimating section may calculate the curvature by using the lane marks. The curvature estimating section receives an image of a road that is captured by the camera 108, and detects the lane marks, which are typically white lines. Further, the curvature estimating section selects three points on the lane marks, obtains a curved line passing the three points by a well-known method, and calculates the curvature.

In each of the exemplary embodiments described above, the combined light distribution patterns are switched in accordance with various conditions while raveling on a road that is curved. Alternatively, when a steering angle is detected by the steering sensor 110, the pattern restricting section may uniformly limit the height of a horizontal cutoff line of the combined light distribution pattern. For example, when a steering angle is detected, the pattern restricting section may instruct the pattern control section to form the V-beam combined light distribution pattern having a lower horizontal cutoff line than the combined high beam light distribution pattern or the one-side high combined light distribution pattern. Further, when the steering angle is detected, the pattern restricting section may uniformly reduce the luminous intensity of the light source 14.

The present invention is not limited to the exemplary embodiments described above. The exemplary embodiments may be combined with each other, or modifications such as various kinds of design changes may be made on the basis of the knowledge of those skilled in the art. The exemplary embodiments, which are formed by the combination of the exemplary embodiments or the combination of the exemplary embodiments and the modifications, have the advantages of the exemplary embodiments and the modifications to be combined.

## Claims

1. A vehicle headlamp apparatus (30, 230) comprising:
right and left lamp units (10) disposed away from each other in a vehicle width direction, each of the lamp units (10) being operable to form at least a low beam light distribution pattern (LoR, LoL) and a high beam light distribution pattern (FL, FR, HiR, HiL);
a vehicle detecting section (76) configured to detect a condition of a vehicle ahead of a vehicle (100, 200) on which the vehicle headlamp apparatus (30, 230) is mounted;
a pattern determining section (80) configured to determine a light distribution pattern based on the condition of the vehicle ahead;
a pattern control section (84) configured to control the lamp units (10) to form the light distribution pattern determined by the pattern determining section (80);
a curve judging section (82) configured to judge whether a road on which the vehicle (100, 200) is traveling is curved; and
a pattern restricting section (88, 188) configured to restrict, when the curve judging section (82) judges that the road is curved, a selection of the high beam light distribution pattern (FL, FR, HiR, HiL) in at least one of the lamp units (10), regardless of the light distribution pattern determined by the pattern determining section (80),
**characterised by**
when the radially inner side of the curve is on a side of a traveling lane of the road, the pattern restricting section (88, 188) instructs the pattern control section (84) to form the low beam light distribution pattern (LoC) with the right and left lamp units (10), and
wherein, when the radially inner side of the curve is on a side of the opposing lane of the road, the pattern restricting section (88, 188) instructs the pattern control section (84) to form the low beam light distribution pattern (LoR, LoL) with the lamp unit (10) that is disposed closer to the radially inner side of the curve.

2. The vehicle headlamp apparatus (30, 230) according to claim 1, wherein the pattern restricting section (88, 188) restricts the selection of the high beam light distribution pattern (FL, FR, HiR, HiL) while the vehicle (100, 200) is traveling on the curve.

3. The vehicle headlamp apparatus (30, 230) according to claim 1 or 2, wherein the pattern restricting section (88, 188) restricts the selection of the high beam light distribution pattern (FL, FR, HiR, HiL) before the vehicle (100, 200) enters the curve.

4. The vehicle headlamp apparatus (30, 230) according to any one of the preceding claims, wherein the curve judging section (82) comprises a curve continuity judging section (86) configured to judge whether there is a series of curves, and when the curve continuity judging section (86) judges that there is a series of curves, the pattern restricting section (88, 188) instructs the pattern control section (84) to form the low beam light distribution pattern (LoC) with the right and left lamp units (10) during a predetermined period.

5. The vehicle headlamp apparatus (30, 230) according to any one of the preceding claims, further comprising a curvature estimating section (78) configured to estimate a curvature of the road on which the vehicle (100, 200) is traveling, wherein the curve judging section (82) judges that the road is curved if the curvature is equal to or greater than a threshold curvature.

6. The vehicle headlamp apparatus (30, 230) according to claim 5, wherein the high beam light distribution pattern (FL, FR, HiR, HiL) includes a one-side high light distribution pattern (HiR, HiL) having a light blocked region above the horizontal line and on one side of the vertical center line opposite to the position of the lamp unit (10) with respect to the right-left direction, wherein the vehicle headlamp apparatus (30, 230) further comprises:
a swivel control section (90) configured to determine a swivel angle ([alpha]) for each of the lamp units (10) based on the curvature; and
a drive instructing section configured to drive the lamp units (10) to swivel in the right-left direction by the swivel angle ([alpha]),
wherein, when the radially inner side of the curve is on a side of the opposing lane of the road and the swivel angle ([alpha]) is equal to or greater than a threshold angle ([beta]),
the pattern restricting section (188) instructs the pattern control section (84) to form the low beam light distribution pattern (LoR, LoL) with the lamp unit (10) that is disposed closer to the opposing lane.

7. The vehicle headlamp apparatus (30, 230) according to claim 1, wherein the high beam light distribution pattern (FL, FR, HiR, HiL) includes a one-side high light distribution pattern (HiR, HiL) having a light blocked region above the horizontal line and on one side of the vertical center line opposite to the position of the lamp unit (10) with respect to the right-left direction, and
when the radially inner side of the curve is on the side of the opposing lane of the road, the pattern restricting section (88, 188) instructs the pattern control section (84) to form the one-side high light distribution pattern (HiR, HiL) with the lamp unit (10) that is disposed closer to a radially outer side of the curve.

## Patentansprüche

1. Fahrzeugscheinwerfervorrichtung (30, 230), umfassend:
rechte und linke Lampeneinheiten (10), die in einer Fahrzeug-Breitenrichtung mit einem Abstand zueinander angeordnet sind, wobei jede der Lampeneinheiten (10) in Betrieb mindestens ein Abblendlicht-Lichtverteilungsmuster (LoR, LoL) und ein Fernlicht-Lichtverteilungsmuster (FL, FR, HiR, HiL) bilden kann;
einen Fahrzeug-Ermittlungsabschnitt (76), der dazu konfiguriert ist, einen Zustand eines Fahrzeugs vor einem Fahrzeug (100, 200), an welchem die Fahrzeugscheinwerfervorrichtung (30, 230) montiert ist, zu ermitteln;
einen Muster-Bestimmungsabschnitt (80), der dazu konfiguriert ist, ein Lichtverteilungsmuster auf der Basis des vorausfahrenden Fahrzeugs zu bestimmen;
einen Muster-Steuerungsabschnitt (84), der dazu konfiguriert ist, die Lampeneinheiten (10) so zu steuern, dass sie das von dem Muster-Bestimmungsabschnitt (80) bestimmte Lichtverteilungsmuster bilden; einen Kurven-Beurteilungsabschnitt (82), der zum Beurteilen konfiguriert ist, ob eine Straße, auf der das Fahrzeug (100, 200) fährt, Kurven aufweist; und
einen Muster-Beschränkungsabschnitt (88, 188), der dazu konfiguriert ist, eine Auswahl des Fernlicht-Lichtverteilungsmusters (FL, FR, HiR, HiL) in zumindest einer der Lampeneinheiten (10) einzuschränken, wenn der Kurven-Beurteilungsabschnitt (82) beurteilt, dass die Straße Kurven aufweist, unabhängig von dem durch den Muster-Bestimmungsabschnitt (80) bestimmten Lichtverteilungsmuster,
**dadurch gekennzeichnet, dass**
wenn die radial innere Seite der Kurve auf einer Seite einer Fahrspur der Straße liegt, der Muster-Beschränkungsabschnitt (88, 188) den Muster-Steuerungsabschnitt (84) dazu anweist, das Abblendlicht-Lichtverteilungsmuster (LoC) mit den rechten und linken Lampeneinheiten (10) zu bilden, und
wobei, wenn die radial innere Seite der Kurve auf einer Seite der gegenüberliegenden Fahrspur der Straße liegt, der Muster-Beschränkungsabschnitt (88, 188) den Muster-Steuerungsabschnitt (84) dazu anweist, das Abblendlicht-Lichtverteilungsmuster (LoR, LoC) mit der Lampeneinheit (10) zu bilden, die näher an der radial inneren Seite der Kurve angeordnet ist.

2. Fahrzeugscheinwerfervorrichtung (30, 230) nach Anspruch 1, wobei der Muster-Beschränkungsabschnitt (88, 188) die Auswahl des Fernlicht-Lichtverteilungsmusters (FL, FR, HiR, HiL) beschränkt, wenn das Fahrzeug (100, 200) um die Kurve fährt.

3. Fahrzeugscheinwerfervorrichtung (30, 230) nach Anspruch 1 oder 2, wobei der Muster-Beschränkungsabschnitt (88, 188) die Auswahl des FernlichtLichtverteilungsmusters (FL, FR, HiR, HiL) beschränkt, bevor das Fahrzeug (100, 200) in die Kurve fährt.

4. Fahrzeugscheinwerfervorrichtung (30, 230) nach einem der vorhergehenden Ansprüche, wobei der Kurven-Beurteilungsabschnitt (82) einen Kurvenkontinuitäts-Beurteilungsabschnitt (86) umfasst, der zum Beurteilen konfiguriert ist, ob es sich um eine Serie von Kurven handelt, und
wenn der Kurvenkontinuitäts-Beurteilungsabschnitt (86) beurteilt, dass es sich um eine Serie von Kurven handelt, der Muster-Beschränkungsabschnitt (88, 188) den Muster-Steuerungsabschnitt (84) dazu anweist, das Abblendlicht-Lichtverteilungsmuster (LoC) mit den rechten und linken Lampeneinheiten (10) während einer vorgegebenen Zeitspanne zu bilden.

5. Fahrzeugscheinwerfervorrichtung (30, 230) nach einem der vorhergehenden Ansprüche, des Weiteren umfassend einen Krümmungs-Schätzungsabschnitt (78), der dazu konfiguriert ist, eine Krümmung der Straße zu schätzen, auf der das Fahrzeug (100, 200) fährt, wobei der Kurven-Beurteilungsabschnitt (82) beurteilt, dass die Straße Kurven aufweist, wenn die Krümmung gleich oder größer als ein Krümmungsschwellenwert ist.

6. Fahrzeugscheinwerfervorrichtung (30, 230) nach Anspruch 5, wobei das Fernlicht-Lichtverteilungsmuster (FL, FR, HiR, HiL) ein einseitiges Fernlicht-Lichtverteilungsmuster (HiR, HiL) beinhaltet, das einen lichtblockierten Bereich über der horizontalen Linie und auf einer Seite der vertikalen Mittellinie gegenüber der Position der Lampeneinheit (10) bezüglich der Rechts-Links-Richtung aufweist, wobei die Fahrzeugscheinwerfervorrichtung (30, 230) des Weiteren umfasst:
einen Schwenk-Steuerungsabschnitt (90), der dazu konfiguriert ist, einen Schwenkwinkel ([alpha]) für die einzelnen Lampeneinheiten (10) basierend auf der Krümmung zu bestimmen; und
einen Ansteuerbefehlsabschnitt, der dazu konfiguriert ist, die Lampeneinheiten (10) zum Schwenken in der Rechts-Links-Richtung um den Schwenkwinkel ([alpha]) anzusteuern,
wobei, wenn die radial innere Seite der Kurve auf einer Seite der gegenüberliegenden Fahrspur der Straße liegt und der Schwenkwinkel ([alpha]) gleich oder größer als ein Winkelschwellenwert ([beta]) ist, der Muster-Beschränkungsabschnitt (88, 188) den Muster-Steuerungsabschnitt (84) dazu anweist, das Abblendlicht-Lichtverteilungsmuster (LoR, LoC) mit der Lampeneinheit (10) zu bilden, die näher an der gegenüberliegenden Fahrspur angeordnet ist.

7. Fahrzeugscheinwerfervorrichtung (30, 230) nach Anspruch 1, wobei das FernlichtLichtverteilungsmuster (FL, FR, HiR, HiL) ein einseitiges Fernlicht-Lichtverteilungsmuster (HiR, HiL) beinhaltet, das einen lichtblockierten Bereich über der horizontalen Linie und auf einer Seite der vertikalen Mittellinie gegenüber der Position der Lampeneinheit (10) bezüglich der Rechts-Links-Richtung aufweist, und
wenn die radial innere Seite der Kurve auf der Seite der gegenüberliegenden Fahrspur der Straße liegt, der Muster-Beschränkungsabschnitt (88, 188) den MusterSteuerungsabschnitt (84) dazu anweist, das einseitige Fernlicht-Lichtverteilungsmuster (HiR, HiL) mit der Lampeneinheit (10) zu bilden, die näher an der radial äußeren Seite der Kurve angeordnet ist.

## Revendications

1. Phare de véhicule (30, 230) qui comprend :
des unités de phare droite et gauche (10) disposées à l'écart l'une de l'autre dans le sens de la largeur du véhicule, chacune des unités de phare (10) pouvant former au moins un faisceau de distribution de la lumière « de croisement » (LoR, LoL) et un faisceau de distribution de la lumière « de route » (FL, FR, HiR, HiL) ;
une section de détection de véhicule (76) configurée pour détecter un état d'un véhicule situé en face d'un véhicule (100, 200) sur lequel le phare de véhicule (30, 230) est monté ;
une section de détermination de faisceau (80) configurée pour déterminer un faisceau de distribution de la lumière sur la base de l'état du véhicule situé en face ;
une section de contrôle de faisceau (84) configurée pour contrôler les unités de phare (10) afin de former le faisceau de distribution de la lumière déterminé par la section de détermination de faisceau (80) ;
une section de jugement de courbe (82) configurée pour juger si une route sur laquelle le véhicule (100, 200) se déplace est incurvée ou non ; et
une section de restriction de faisceau (88, 188) configurée pour restreindre, lorsque la section de jugement de courbe (82) juge que la route est incurvée, une sélection du faisceau de distribution de la lumière « de route » (FL, FR, HiR, HiL) dans au moins l'une des unités de phare (10), quel que soit le faisceau de distribution de la lumière déterminé par la section de détermination de faisceau (80),
**caractérisé en ce que**
lorsque le côté radialement intérieur de la courbe se trouve sur un côté d'une voie de déplacement de la route, la section de restriction de faisceau (88, 188) demande à la section de contrôle de faisceau (84) de former le faisceau de distribution de la lumière « de croisement » (LoC) avec les unités de phare droite et gauche (10), et
dans lequel, lorsque le côté radialement intérieur de la courbe se trouve sur un côté de la voie opposée de la route, la section de restriction de faisceau (88, 188) demande à la section de contrôle de faisceau (84) de former le faisceau de distribution de la lumière « de croisement » (LoR, LoL) avec l'unité de phare (10) qui est la plus proche du côté radialement intérieur de la courbe.

2. Phare de véhicule (30, 230) selon la revendication 1, dans lequel la section de restriction de faisceau (88, 188) restreint la sélection du faisceau de distribution de la lumière « de route » (FL, FR, HiR, HiL) pendant que le véhicule (100, 200) se déplace sur la courbe.

3. Phare de véhicule (30, 230) selon la revendication 1 ou 2, dans lequel la section de restriction de faisceau (88, 188) restreint la sélection du faisceau de distribution de la lumière « de route » (FL, FR, HiR, HiL) avant que le véhicule (100, 200) pénètre dans la courbe.

4. Phare de véhicule (30, 230) selon l'une quelconque des revendications précédentes, dans lequel la section de jugement de courbe (82) comprend une section de jugement de continuité de courbe (86) configurée pour juger si il existe une série de courbes ou non, et
lorsque la section de jugement de continuité de courbe (86) juge qu'il existe une série de courbes, la section de restriction de faisceau (88, 188) demande à la section de contrôle de faisceau (84) de former le faisceau de distribution de la lumière « de croisement » (LoC) avec les unités de phare droite et gauche (10) pendant une période prédéterminée.

5. Phare de véhicule (30, 230) selon l'une quelconque des revendications précédentes, qui comprend en outre une section d'estimation de courbure (78) configurée pour estimer une courbure de la route sur laquelle le véhicule (100, 200) se déplace, dans lequel la section de jugement de courbe (82) juge que la route est courbe si la courbure est égale ou supérieure à un seuil de courbure.

6. Phare de véhicule (30, 230) selon la revendication 5, dans lequel le faisceau de distribution de la lumière « de route » (FL, FR, HiR, HiL) comprend un faisceau de distribution de la lumière « de route » à un seul côté (HiR, HiL) qui possède une zone de blocage de la lumière au-dessus de la ligne horizontale et sur un côté de la ligne centrale verticale opposée à l'emplacement de l'unité de phare (10) par rapport à la direction droite/gauche, dans lequel le phare de véhicule (30, 230) comprend en outre :
une section de contrôle de pivotement (90) configurée pour déterminer un angle de pivotement ([alpha]) pour chacune des unités de phare (10) sur la base de la courbure ; et
une section d'instruction d'entraînement configurée pour entraîner les unités de phare (10) afin qu'elles pivotent dans la direction droite/gauche selon l'angle de pivotement ([alpha]),
dans lequel, lorsque le côté radialement intérieur de la courbe se trouve d'un côté de la voie opposée de la route et l'angle de pivotement ([alpha]) est supérieur ou égal à un angle de seuil ([beta]), la section de restriction de faisceau (188) demande à la section de contrôle de faisceau (84) de former le faisceau de distribution de la lumière « de croisement » (LoR, LoL) avec l'unité de phare (10) qui est la plus proche de la voie opposée.

7. Phare de véhicule (30, 230) selon la revendication 1, dans lequel le faisceau de distribution de la lumière « de route » (FL, FR, HiR, HiL) comprend un faisceau de distribution de la lumière « de route » à un seul côté (HiR, HiL) qui possède une zone de blocage de la lumière au-dessus de la ligne horizontale et sur un côté de la ligne centrale verticale opposée à l'emplacement de l'unité de phare (10) par rapport à la direction droite/gauche, et
lorsque le côté radialement intérieur de la courbe se trouve du côté de la voie opposée de la route, la section de restriction de faisceau (88, 188) demande à la section de contrôle de faisceau (84) de former le faisceau de distribution de la lumière « de route » à un seul côté (HiR, HiL) avec l'unité de phare (10) qui est plus proche du côté radialement extérieur de la courbe.
